# EUROPÄISCHE PATENTSCHRIFT

(11) **EP 2 417 549 B1**
(45) Veröffentlichungstag und Bekanntmachung des Hinweises auf die Patenterteilung: **16.05.2018**
(21) Anmeldenummer: 10707881.8
(22) Anmeldetag: 01.03.2010
(51) Int. Cl.: G06F 21/34, G06F 21/82, G06F 21/36

(54) **VERFAHREN UND VORRICHTUNG ZUM SICHEREN EINGEBEN EINES ZUGANGSCODES FÜR EINEN SICHEREN ZUGANG ZU EINEM ELEKTRONISCHEN DIENST**
METHOD AND APPARATUS FOR SECURE INPUT OF AN ACCESS CODE FOR SECURE ACCESS TO AN ELECTRONIC SERVICE
PROCÉDÉ ET DISPOSITIF POUR SAISIE SECURISÉE D'UN CODE D'ACCÈS POUR ACCÈS SECURISÉ À UN SERVICE ÉLECTRONIQUE

(30) Priorität: 06.04.2009 DE 102009016527
(43) Veröffentlichungstag der Anmeldung: 15.02.2012
(73) Patentinhaber: Giesecke+Devrient Mobile Security GmbH, 81677 München (DE)
(72) Erfinder: MARTINI, Ullrich, 81669 München (DE)
(86) Internationale Anmeldenummer: PCT/EP2010/052552
(87) Internationale Veröffentlichungsnummer: WO 2010/115663

(56) Entgegenhaltungen:
- EP-A1- 0 393 784
- WO-A1-00/48076
- WO-A2-2006/072855
- DE-C1- 19 923 138
- US-A1- 2004 153 660
- US-A1- 2005 177 522

## Beschreibung

Die Erfindung betrifft ein Verfahren zum sicheren Eingeben eines Zugangscodes für einen sicheren Zugang zu einem elektronischen Dienst, bei dem ein zufälliger Anfangszustand einer Mehrzahl von benutzerwählbaren Feldern bereitgestellt wird und die Mehrzahl an benutzerwählbaren Feldern über eine graphische Schnittstelle angezeigt wird. Bei dem Verfahren erfolgt eine Eingabe eines Zugangscodes durch einen Benutzer durch Verändern des Zustands der angezeigten wählbaren Felder, wobei ein Zugang zu einem elektronischen Dienst gewährt wird, wenn der eingegebene Zugangscode einem vorgegebenen Zugangscode entspricht. Die Erfindung betrifft ferner eine Vorrichtung zum sicheren Eingeben eines Zugangscodes für einen sicheren Zugang zu einem elektronischen Dienst.

Um einen Zugang unberechtigter Personen zu besonders geschützten Einrichtungen oder Systemen, wie z.B. Geldautomaten oder Computersystemen, zu verhindern, müssen die berechtigten Benutzer ihre Zugangsberechtigung häufig durch Eingabe eines speziellen Zugangscodes in eine Kontroll- oder Sicherungseinrichtung oder ein Kontrollsystem nachweisen. Dieser Zugangscode, der üblicherweise als persönliche Kennzahl, Geheimzahl, Kennwort, Passwort oder auch nur als PIN (Personal Identification Number) bezeichnet wird, kann je nach Anwendungszweck aus einer alphabethischen, numerischen oder alphanumerischen Zeichenkombination unterschiedlicher Länge bestehen, die jedem zugangsberechtigten Benutzer individuell zugeordnet wird.

Ein solcher Zugangscode wird typischerweise in Verbindung mit einer Chipkarte oder Magnetstreifenkarte verwendet, um den Benutzer einer solchen Karte als rechtmäßigen Benutzer, d.h. üblicherweise als Besitzer der Karte, identifizieren zu können. Die zusätzliche Verwendung eines den Kartenbesitzer legitimierenden und nur ihm bekannten persönlichen Kenncodes bietet eine hohe Sicherheit gegen einen eventuellen Missbrauch einer solchen Karte, wenngleich sich auch hiermit keine absolute Sicherheit erreichen lässt. Ein Missbrauch der Karte durch Unbefugte setzt jedoch voraus, dass diese nicht nur die Karte in ihren Besitz bringen, sondern gleichzeitig auch noch den zugehörigen Zugangscode ausspähen, so dass der Besitzer einer solchen Karte selbst bei einem Verlust der Karte noch ausreichend geschützt ist. Eine Kombination aus Chipkarte und persönlichem Zugangscode wird beispielsweise auch bei der Zugangssicherung zu PCs benutzt oder bei der Sicherung von Gebäuden und Räumen verwendet.

Bei der Benutzung einer solchen Chipkarte ist die Karte üblicherweise in ein Lesegerät, welches mit einem Rechner gekoppelt ist, einzuführen, um die Gültigkeit der Karte überprüfen zu lassen. Über eine Eingabevorrichtung des Rechners, in der Regel eine Tastatur, wird dann durch den Benutzer der Zugangscode eingegeben, wobei eine Kontrolle an einer Anzeigevorrichtung des Rechners vorgenommen werden kann. Um ein Ausspähen des von dem Benutzer eingegebenen Zugangscodes zu verhindern oder zumindest möglichst schwer zu machen, sind aus dem Stand der Technik verschiedene Varianten bekannt geworden.

Die EP 1181 643 B1 offenbart ein gattungsgemäßes Verfahren sowie eine gattungsgemäße Vorrichtung, bei denen der Zugangscode nicht unmittelbar in eine Eingabevorrichtung eines Rechners eingegeben wird, sondern ein zufälliger Anfangszustand einer Mehrzahl von benutzerwählbaren Feldern angeboten und über eine graphische Oberfläche angezeigt wird. Der Benutzer gibt den Zugangscode durch Verändern des Zustands der angezeigten benutzerwählbaren Felder ein.

Die DE 198 03 339 B4 offenbart ein Verfahren und eine Vorrichtung zur Überprüfung der Zugangsberechtigung eines Benutzers, bei denen ein Kenncode in eine Kontroll- oder Sicherungseinrichtung mittels einer Eingabevorrichtung eingegeben wird, wobei durch eine Anzeigeeinrichtung der Eingabevorrichtung eine zufällige Zeichenkombination angezeigt wird, die von dem Benutzer mittels einer Eingabetastatur der Eingabevorrichtung zu seinem persönlichen Kenncode verändert wird. Dabei wird der Kenncode selbst nicht angezeigt oder nach erfolgter Eingabe unkenntlich gemacht. Die darzustellende zufällige Zeichenkombination wird verschlüsselt zur Anzeigeeinrichtung übertragen und dort zum Anzeigen wieder entschlüsselt.

Aus der EP 0 393 784 A1 ist eine Chipkarte mit einer Tastatur und einem Display bekannt, bei der für die Eingabe des Zugangscodes von einem Offset ausgegangen wird, um eine Abnutzung bestimmter Tasten und damit ein Ausspähen des Zugangscodes zu verhindern.

Aus US 2005/0177522 ist ein Verfahren bekannt, bei dem ein zufällig gewählter Anfangszustand eines PIN-Codes, der auf einem Terminal angezeigt wird mittels der Eingabe durch Pfeiltasten auf einer PIN-Tastatur auf die korrekte PIN abgeändert wird. Dabei wird jedoch die PIN im Terminal konstruiert und ist dort gegen Abhöhren des Konstruktionsvorganges anfällig.

Es ist Aufgabe der vorliegenden Erfindung, ein alternatives Verfahren und eine alternative Vorrichtung zum sicheren Eingeben eines Zugangscodes anzugeben, mit welchen auf einfache Weise eine hohe Sicherheit gegenüber Manipulation gegeben ist.

Diese Aufgaben werden gelöst durch ein Verfahren mit den Merkmalen des Patentanspruches 1 sowie eine Vorrichtung mit den Merkmalen des Patentanspruches 10. Vorteilhafte Ausgestaltungen ergeben sich jeweils aus den abhängigen Patentansprüchen.

Die Erfindung schafft ein Verfahren zum sicheren Eingeben eines Zugangscodes für einen sicheren Zugang zu einem elektronischen Dienst, mit den folgenden Schritten: Bereitstellen eines zufälligen Anfangszustands einer Mehrzahl von benutzerwählbaren Feldern; Anzeige der Mehrzahl an benutzerwählbaren Feldern über eine Anzeigevorrichtung; Eingabe eines Zugangscodes durch einen Benutzer durch Verändern des Zustands der angezeigten benutzerwählbaren Felder, wobei ein Zugang zu einem elektronischen Dienst gewährt wird, wenn der eingegebene Zugangscode einem vorgegebenen Zugangscode entspricht. Bevorzugt erfolgt die Anzeige der Mehrzahl an benutzerwählbaren Feldern auf einer Anzeigevorrichtung einer Chipkarte, die über ein Lesegerät mit einem Rechner zum Datenaustausch gekoppelt ist. Ferner erfolgt das Verändern des Zustands der angezeigten benutzerwählbaren Felder über eine Eingabevorrichtung des Rechners.

Die Erfindung schafft ferner eine Vorrichtung zum sicheren Eingeben eines Zugangscodes für einen sicheren Zugang zu einem elektronischen Dienst. Die Vorrichtung umfasst einen tragbaren Datenträger, der in bevorzugter Ausführung eine Chipkarte ist, welche eine Anzeigevorrichtung zur graphischen Anzeige einer Mehrzahl an benutzerwählbaren Feldern aufweist. Sie umfasst ferner ein Lesegerät für den kontaktbehafteten oder kontaktlosen Datenaustausch mit der Chipkarte sowie einen mit dem Lesegerät gekoppelten Rechner mit einer Eingabevorrichtung zur Eingabe eines Zugangscodes durch Verändern des Zustands von angezeigten benutzerwählbaren Feldern durch einen Benutzer.

Die Erfindung ermöglicht damit mit Hilfe einer sog. Displaykarte und eines einfachst ausgebildeten Lesegeräts die Bereitstellung eines sog. Klasse 3-Lesegeräts. Ein Klasse 3-Lesegerät ist ein Lesegerät mit manipulationssicherer Eingabe und manipulationssicherer Tastatur. Um die Eingabe des Zugangscodes, z.B. eine PIN (Personal Identification Number) vorzunehmen, erzeugt die Chipkarte beispielsweise eine Zufallszahl und zeigt diese auf ihrer Anzeigevorrichtung an. Der Benutzer ändert die einzelnen Ziffern der angezeigten Zufallszahl mit Hilfe der Eingabevorrichtung des Rechners, an den das Lesegerät angeschlossen ist. Der Rechner "sieht" auf diese Weise lediglich Steuerbefehle der Eingabevorrichtung, nicht jedoch den eigentlichen Zugangscode, da dieser nur auf der Anzeigevorrichtung der Chipkarte angezeigt wird. Selbst dann, wenn sich ein Angreifer Zugang zu dem Rechner verschafft, ist es ihm nicht möglich, den durch den Benutzer eingegebenen Zugangscode zu entschlüsseln, da dieser dem Rechner zu keinem Zeitpunkt übermittelt oder zur Verfügung gestellt wird.

In einer ersten Ausgestaltungsvariante des erfindungsgemäßen Verfahrens wird die Chipkarte, wenn diese kontaktbehaftet ausgebildet ist, derart in dem Lesegerät angeordnet, dass die die Mehrzahl an benutzerwählbaren Feldern anzeigende Anzeigevorrichtung jederzeit einsehbar ist. Hierdurch ist sichergestellt, dass der Benutzer die Veränderung der benutzerwählbaren Felder über die Anzeigevorrichtung der Chipkarte jederzeit nachvollziehen und beobachten kann.

Gemäß einer weiteren zweckmäßigen Ausgestaltung wird bei einem Verändern des Zustands eines der angezeigten benutzerwählbaren Felder die Veränderung an der Anzeigevorrichtung visualisiert. Die Visualisierung der Veränderungen an der Anzeigevorrichtung ermöglicht es dem Benutzer, die Einstellung eines jeweiligen benutzerdefinierten Felds zur Eingabe des Zugangscodes zu kontrollieren.

Es ist zweckmäßig, wenn zur Eingabe des Zugangscodes die Mehrzahl an benutzerwählbaren Feldern sequentiell verändert wird. Dabei kann die Reihenfolge, in der die Felder verändert werden, prinzipiell beliebig sein. Zweckmäßigerweise erfolgt die Veränderung der Felder jedoch aufeinander folgend.

Es ist weiterhin vorgesehen, dass durch den Benutzer eine Bestätigung vorgenommen wird, wenn ein (durch den Benutzer) verändertes Feld den für den Zugangscode korrekten Wert aufweist, woraufhin zu einem nächsten zu verändernden Feld geschaltet wird. Durch die durch den Benutzer vorgenommene Bestätigung wird dem Rechner "mitgeteilt", dass ein bestimmter Wert korrekt ist. Die Bestätigung kann beispielsweise auch dadurch bewirkt werden, dass der Benutzer von einem Feld zu einem anderen Feld springt.

Dabei ist es weiterhin zweckmäßig, wenn nach der Bestätigung des veränderten Felds der korrekte Wert des bestätigten Felds unkenntlich gemacht wird. Hierdurch kann der von dem Benutzer eingegebene Wert auf visuellem Wege nicht mehr ausspioniert werden.

Um dem Benutzer die Eingabe des Zugangscodes zu erleichtern, ist es weiterhin zweckmäßig, wenn das zu verändernde Feld gegenüber den anderen Feldern hervorgehoben oder markiert dargestellt wird.

Gemäß einer weiteren Ausgestaltung weisen die Mehrzahl an benutzerwählbaren Feldern alphanumerische Zeichen auf. Ein alphanumerisches Zeichen ist entweder ein Buchstabe oder eine Ziffer. Ein alphanumerisches Zeichen kann daneben auch ein Sonderzeichen, wie z.B. ein Punkt, ein Komma usw. umfassen. Der zufällige Anfangszustand der Mehrzahl von benutzerwählbaren Feldern umfasst damit beispielsweise die eingangs bereits erwähnte Zufallszahl oder eine alphanumerische Zeichenfolge.

Die Veränderung der Mehrzahl an benutzerwählbaren Feldern erfolgt zweckmäßigerweise über eine als Zeigegerät ausgebildete Eingabevorrichtung. Als Zeigegerät kann eines oder mehrere der folgenden Geräte verwendet werden: eine mit dem Rechner verbundene Maus, insbesondere mit einem Scrollrad; eine Tastatur des Rechners, insbesondere Cursortasten der Tastatur; ein Touchscreen des Rechners; ein Touchpad des Rechners. Daneben können auch andere geeignete Eingabevorrichtungen, welche typischerweise zur Interaktion mit einem Rechner verwendet werden, herangezogen werden.

Bei einer erfindungsgemäßen Vorrichtung sind der Rechner und/oder die Chipkarte derart ausgebildet, dass ein zufälliger Anfangszustand der Mehrzahl an benutzerwählbaren Feldern bereitgestellt wird. Eine größtmögliche Sicherheit wird dann erreicht, wenn der zufällige Anfangszustand durch die Chipkarte bereitgestellt wird, da andernfalls, ausgehend von dem Anfangszustand und der Überwachung der Steuerbefehle über die Eingabevorrichtung des Rechners, gegebenenfalls ein Rückschluss auf den Zugangscode möglich wäre.

Es ist weiterhin zweckmäßig, wenn der Rechner und/oder die Chipkarte dazu ausgebildet sind, dem Benutzer einen Zugang zu einem elektronischen Dienst zu gewähren, wenn der eingegebene Zugangscode einem vorgegebenen Zugangscode entspricht.

In einer weiteren Ausgestaltung ist das Lesegerät derart ausgebildet, dass die kontaktbehaftet ausgebildete und in dem Lesegerät angeordnete Chipkarte eine graphische Anzeige der Mehrzahl an benutzerwählbaren Feldern auf der Anzeigevorrichtung ermöglicht.

Darüber hinaus kann die Vorrichtung weitere Mittel zur Durchführung des erfindungsgemäßen Verfahrens umfassen.

Die Erfindung wird nachfolgend näher anhand der Figuren erläutert. Es zeigen:
- Fig. 1: eine schematische Darstellung einer erfindungsgemäßen Vorrichtung, und
- Fig. 2: eine schematische Darstellung der prinzipiellen Funktionsweise des erfindungsgemäßen Verfahrens zum sicheren Eingeben eines Zugangscodes.

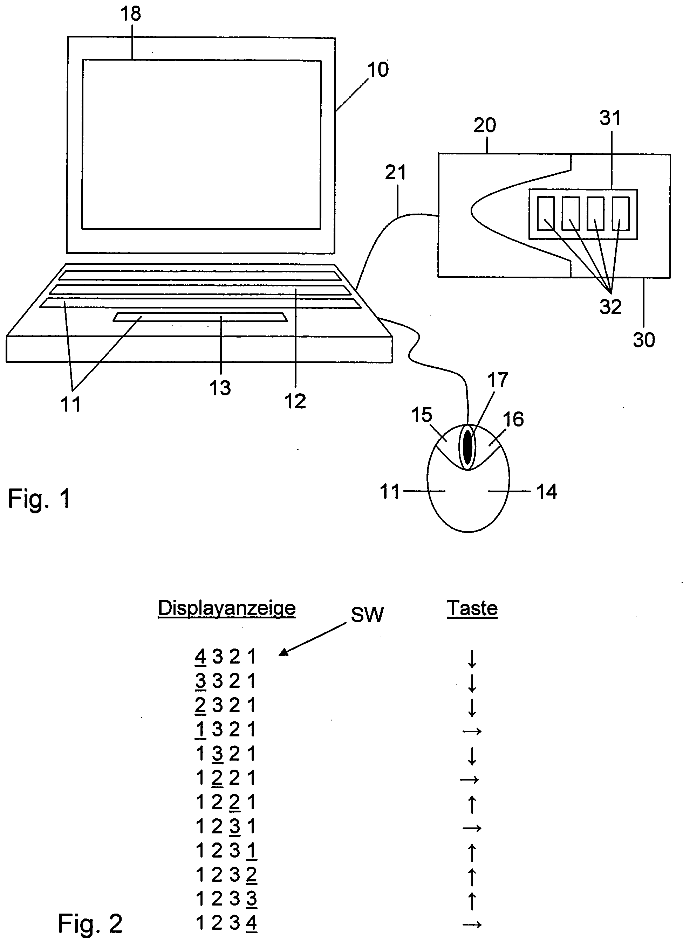

Eine erfindungsgemäße Vorrichtung ist schematisch in Fig. 1 dargestellt. Diese umfasst einen Rechner 10, der über eine kontaktbehaftete oder kontaktlose Kommunikationsverbindung 21 mit einem Lesegerät 20 zum Datenaustausch verbunden ist. Bei dem Lesegerät 20 handelt es sich um ein sog. Einfachst-Lesegerät, das über keine eigene Anzeige- und Eingabevorrichtung verfügt. Das Lesegerät 20 kann gemäß der gezeigten schematischen Darstellung mit einem tragbaren Datenträger 30 gekoppelt werden, so dass ein Datenaustausch zwischen Lesegerät 20 und tragbarem Datenträger 30 möglich ist. Der tragbare Datenträger 30 ist mit einem Mikroprozessor ausgestattet und baulich so gestaltet, dass er von einem Nutzer bequem ständig mitgeführt werden kann. Für den tragbaren Datenträger 30 wird im folgenden die Ausführungsform einer Chipkarte zugrundegelegt, ohne dass die Ausführung hierauf beschränkt sein soll; andere Ausführungsformen, etwa in Token-Gestalt, als Schlüsselanhänger oder in Armbandform sind ohne weiteres möglich. Der Datenaustausch erfolgt entsprechend der Ausführung der Chipkarte 30 kontaktbehaftet und/oder kontaktlos. Die Chipkarte 30 ist eine sog. Display-Karte, die über eine eigene Anzeigevorrichtung 31 verfügt. Im Ausführungsbeispiel ist die Anzeigevorrichtung 31 zur Darstellung von vier Anzeigefeldern oder Feldern 32 ausgebildet, mehr oder weniger Felder 32 sind möglich. Typischerweise besitzt die Chipkarte 30 keine eigenen Eingabemittel zur Beeinflussung des Inhalts der Felder 32.

Der Rechner 10 umfasst in bekannter Weise eine Eingabevorrichtung 11, die in der gezeigten Darstellung eine wahlweise zu benutzende Tastatur 12, ein Trackpad 13 sowie eine Maus 14 umfasst. Unter Rechner 10 wird jede Art von Computer oder computerartigem Gerät verstanden, das über die genannten Komponenten verfügt und das mit einer Chipkarte verbindbar ist. Die über die Eingabevorrichtung 11 eingegebenen Befehle bzw. Zeichen werden auf einem Display 18 des Rechners 10 graphisch dargestellt. Sofern das Display 18 als sog. Touchscreen ausgebildet ist, kann eine Eingabe von Steuerbefehlen auch über das Display 18 selbst erfolgen. Die hier über ein Kabel mit dem Rechner 10 verbundene Maus 14 verfügt in bekannter Weise beispielhaft über zwei Maustasten 15,16 sowie ein dazwischen angeordnetes Scrollrad 17. Über die Kommunikationsverbindung 21 werden über die Eingabevorrichtung 11 erzeugte Eingaben an die Chipkarte 30 geleitet. Vorgesehen sein kann, dass das Verbinden einer Chipkarte 30 mit dem Rechner 10 eine Anzeige oder einen Hinweis auf dem Display 18 erzeugt, dass Eingaben an die Chipkarte 30 möglich sind.

Zum sicheren Eingeben eines Zugangscodes für einen sicheren Zugang zu einem elektronischen Dienst wird ein zufälliger Anfangszustand, z.B. eine vierstellige Zufallszahl, vom Mikroprozessor der Chipkarte 30 erzeugt und auf der Anzeigevorrichtung 31 dargestellt. Grundsätzlich kann der zufällige Anfangszustand durch jedes beliebige alphanumerische Zeichen gebildet sein. Der Benutzer kann den Zugangscode zu dem elektronischen Dienst nun ausgehend von dem Anfangszustand durch das Verändern der Felder der Zufallszahl eingeben.

Die Veränderung des Zustands der Zufallszahl erfolgt dabei über die Eingabevorrichtung 11 des Rechners 10, d.h. die Erzeugung der Steuersignale zum Verändern der Anzeigevorrichtung 31 erfolgt über ein zu dem Mikroprozessor der Chipkarte 30 separates Gerät. Die über die Eingabevorrichtung 11 erzeugten Steuersignale werden über die Kommunikationsverbindung 21 an die Chipkarte 30 übertragen, wo sie eine Änderung der Anzeigefelder 32 bewirken. Nur dann, wenn der durch Veränderung des Anfangszustandes erzeugte Zugangscode einem vorgegebenen Zugangscode, der beispielsweise auf der Chipkarte 30 hinterlegt ist, entspricht, wird ein Zugang zu dem elektronischen Dienst gewährt.

Die Vorgehensweise zur Eingabe des Zugangscodes ist schematisch in Fig. 2 dargestellt. In Fig. 2 ist einmal die Displayanzeige sowie ein durch den Benutzer zu betätigendes Tastensymbol der Cursortasten der Tastatur 12 dargestellt, um, ausgehend von dem Anfangszustand, über eine Mehrzahl an Zwischenschritten zu dem Zugangscode zu gelangen. Es wird von einem zufälligen Startwert SW von 4-3-2-1 ausgegangen, der durch den Mikroprozessor der Chipkarte 30 erzeugt und auf der Anzeigevorrichtung 31 dargestellt wird. Die Eingabe des Zugangscodes erfolgt ausgehend von dem Startwert SW durch sequentielle Veränderung eines jeden Anzeigefelds 32. Im Ausführungsbeispiel ist der einzugebende Zugangscode 1-2-3-4. Das durch den Benutzer über die Eingabevorrichtung 11 des Rechners 11, im Ausführungsbeispiel die Cursortasten der Tastatur 12, zu verändernde Anzeigefeld 32 auf der Chipkarte 30 ist hervorgehoben oder markiert dargestellt. Die Hervorhebung kann, wie im Ausführungsbeispiel der Fig. 2 durch Unterstreichung, sowie durch inverse Darstellung und dergleichen erfolgen.

Zunächst betätigt der Benutzer die Cursortaste "nach unten" dreimal, um - ausgehend von der Ziffer "4" - die zu erreichende Ziffer "1" einzustellen. Die Veränderung der Ziffer "4" in die korrekte Ziffer "1" könnte auch durch das Betätigen der Cursortaste "nach oben" erfolgen, so dass ausgehend von der Ziffer "4" über die Ziffern "5" , "6", "7", "8", "9", "0" die Ziffer 1 erreicht wird. Um die korrekte Ziffer "1" zu bestätigen, betätigt der Benutzer die Cursortaste "nach rechts", um damit gleichzeitig von dem ersten, linken Anzeigefeld, zu dem zweiten, daneben angeordneten Anzeigefeld zu gelangen. In entsprechender Weise wird die Ziffer "3" in die zu erreichende Ziffer "2" durch einmaliges Betätigen der Cursortaste "nach unten" betätigt. Der beschriebene Vorgang wird für die beiden verbleibenden Anzeigefelder in entsprechender Weise wiederholt.

Um das Ausspionieren der auf der Anzeigevorrichtung 31 angezeigten, korrekten Ziffern zu verhindern, ist es zweckmäßig, wenn nach der Bestätigung eines veränderten Felds (hier durch Betätigung der Cursortaste "nach rechts") der korrekte Wert unkenntlich gemacht wird. Dies kann beispielsweise durch das Stellvertretersymbol eines Sterns erfolgen.

Die Veränderung des Zustands des angezeigten alphanumerischen Zeichens in einem der Anzeigefelder 32 kann anstatt der Verwendung der Cursortasten der Tastatur 12 auch mit Hilfe des Trackpads 13 oder der Maus 14 erfolgen. Hierzu kann z.B. mit der Maus das zu verändernde Anzeigefeld 32 ausgewählt werden. Das Weiterschalten des angezeigten alphanumerischen Zeichens kann beispielsweise über das Scrollrad 17 oder eine auf dem Display 18 erzeugte virtuelle Pfeiltaste erfolgen. In entsprechender Weise kann dies durch die Verwendung des Trackpads 13 geschehen.

Ist der Zugangscode vollständig eingegeben ist, kann er für eine Authentifikation auf der Chipkarte 30 verwendet werden, so dass Zugang zu dem elektronischen Dienst gewährt werden kann. Die Bestätigung der vollständigen Eingabe des Zugangscodes kann dabei ebenfalls über die Tastatur 12 erfolgen; alternativ kann auch ein Bestätigungseingabemitte, etwa ein Druckknopf, auf der Chipkarte 30 vorgesehen sein. Möglich ist aber auch, dass ein auf den Anzeigefeldern 32 gezeigter Zugangscode durch entsprechende Handhabung der Chipkarte 30, etwa durch erneutes Verbinden mit dem Rechner 11, verwendet wird. Nach erfolgreichere Authentifikation kann die Chipkarte 30 beispielsweise ein Einmalpaßwort erzeugen und anzeigen oder an den Rechner 10 übertragen. Die Authentifikation kann auch durch den Rechner 10 oder einen weiteren, mit dem Rechner 10 gekoppelten Rechner erfolgen. Die Kommunikation erfolgt bevorzugt gesichert.

Der Vorteil des erfindungsgemäßen Vorgehens besteht darin, dass der Zugangscode nicht von dem Verhalten des Benutzers an dem Rechner abgeleitet werden kann. Ein Angreifer würde allenfalls feststellen, dass durch die Anzahl der Betätigung einer Taste der Tastatur oder das Scrollrad eine Erhöhung oder Erniedrigung einer Ziffer oder eines Zeichens erfolgt. Solange der Angreifer jedoch den zufälligen Anfangszustand, d.h. die Zufallszahl oder alphanumerische Zeichenfolge, nicht kennt, ist diese Information nutzlos.

## Patentansprüche

1. Verfahren zum sicheren Eingeben eines Zugangscodes für einen sicheren Zugang zu einem elektronischen Dienst, wobei der Dienst über oder auf einen Rechner (10) bereitgestellt wird und wobei ein Zugang zu einem elektronischen Dienst nur gewährt wird, wenn der eingegebene Zugangscode einem vorgegebenen Zugangscode entspricht, mit den folgenden Schritten:
- Bereitstellen eines zufälligen Anfangszustands einer Mehrzahl von benutzerwählbaren Feldern (32);
- Anzeige der Mehrzahl an benutzerwählbaren Feldern (32) über eine Anzeigevorrichtung (31);
- Eingabe des Zugangscodes durch einen Benutzer durch Verändern des Zustands der angezeigten benutzerwählbaren Felder (32),;
**dadurch gekennzeichnet, daß**
- zur Durchführung des Verfahrens ein tragbarer Datenträger (30) mit dem Rechner (10) verbunden wird,
- die Anzeige der Mehrzahl an benutzerwählbaren Feldern (32) auf einer Anzeigevorrichtung (31) des tragbaren Datenträgers (30) erfolgt, und
- das Verändern des Zustands der angezeigten benutzerwählbaren Felder (32) über eine Eingabevorrichtung (11) des Rechners (10) erfolgt,
- nach vollständiger Eingabe des Zugangscodes entweder auf dem tragbaren Datenträger (30) eine Authentifikation erfolgt oder der eingegebene Zugangscode hierzu vom tragbaren Datenträger (30) an den Rechner (10) übertragen wird.

2. Verfahren nach Anspruch 1, bei dem, wenn der tragbare Datenträger (30) kontaktbehaftet ausgebildet ist, er derart in dem Lesegerät (20) angeordnet wird, dass die die Mehrzahl an benutzerwählbaren Feldern (32) anzeigende Anzeigevorrichtung (31) jederzeit einsehbar ist.

3. Verfahren nach Anspruch 1 oder 2, bei dem bei einem Verändern des Zustands eines der angezeigten benutzerwählbaren Felder (32) die Veränderung an der Anzeigevorrichtung (31) visualisiert wird.

4. Verfahren nach einem der vorherigen Ansprüche, bei dem zur Eingabe des Zugangscodes die Mehrzahl an benutzerwählbaren Feldern (32) sequentiell verändert wird.

5. Verfahren nach Anspruch 4, bei dem durch den Benutzer eine Bestätigung vorgenommen wird, wenn ein verändertes Feld (32) den für den Zugangscode korrekten Wert aufweist, woraufhin zu einem nächsten zu verändernden Feld (32) geschaltet wird.

6. Verfahren nach Anspruch 5, bei dem nach der Bestätigung des veränderten Felds (32) der korrekte Wert unkenntlich gemacht wird.

7. Verfahren nach einem der vorherigen Ansprüche, bei dem das zu verändernde Feld (32) gegenüber den anderen Feldern (32) hervorgehoben oder markiert dargestellt wird.

8. Verfahren nach einem der vorherigen Ansprüche, bei dem der Benutzer den Zugangscode über eine als Zeigegerät (12, 13, 14) ausgebildete Eingabevorrichtung (11) eingibt.

9. Verfahren nach Anspruch 8, bei dem als Zeigegerät eine oder mehrere der folgenden Geräte verwendet werden:
- eine mit dem Rechner (10) verbundene Maus, insbesondere mit einem Scrollrad;
- eine Tastatur des Rechners (10), insbesondere Cursor-Tasten der Tastatur;
- ein Touchscreen des Rechners (10);
- ein Touchpad des Rechners (10).

10. Vorrichtung zum sicheren Eingeben eines Zugangscodes für einen sicheren Zugang zu einem elektronischen Dienst, umfassend:
- einen tragbaren Datenträger (30), die eine Anzeigevorrichtung (31) zur graphischen Anzeige einer Mehrzahl an benutzerwählbaren Feldern (32) aufweist;
- ein Lesegerät (20) für den kontaktbehafteten oder kontaktlosen Datenaustausch mit dem tragbaren Datenträger (30);
- einen mit dem Lesegerät (20) gekoppelten Rechner (10), der eine Eingabevorrichtung (11) aufweist, mittels derer der Zustand von angezeigten benutzerwählbaren Feldern (32) durch einen Benutzer veränderbar ist, um auf der Anzeigevorrichtung (31) des tragbaren Datenträgers (30) einen Zugangscode einzustellen,
- wobei der tragbare Datenträger (30) dazu eingerichtet ist, den Zugangscode nach vollständiger Eingabe entweder zu authentifizieren oder zur Authentifikation an den Rechner (10) zu übertragen.

11. Vorrichtung nach Anspruch 10, bei der der Rechner (10) und/oder der tragbare Datenträger (30) derart ausgebildet ist, dass ein zufälliger Anfangszustand der Mehrzahl an benutzerwählbaren Feldern (32) bereitgestellt wird.

12. Vorrichtung nach Anspruch 10 oder 11, bei der der Rechner (10) und/oder der tragbare Datenträger (30) dazu ausgebildet sind, dem Benutzer einen Zugang zu einem elektronischen Dienst zu gewähren, wenn der eingegebene Zugangscode einem vorgegebenen Zugangscode entspricht.

13. Vorrichtung nach einem der Ansprüche 10 bis 12, bei der das Lesegerät (20) derart ausgebildet ist, dass der kontaktbehaftet ausgebildete und in dem Lesegerät (20) angeordnete tragbare Datenträger (30) eine graphische Anzeige der Mehrzahl an benutzerwählbaren Feldern (32) auf der Anzeigevorrichtung (31) ermöglicht.

14. Vorrichtung nach einem der Ansprüche 10 bis 13, **dadurch gekennzeichnet, daß** sie zur Eingabe des Zugangscodes
- eine mit dem Rechner (10) verbundene Maus, insbesondere mit einem Scrollrad;
- eine Tastatur des Rechners (10), insbesondere Cursor-Tasten der Tastatur;
- ein Touchscreen des Rechners (10); oder
- ein Touchpad des Rechners (10) aufweist.

15. Vorrichtung nach einem der Ansprüche 10 bis 13, **dadurch gekennzeichnet, dass** der tragbare Datenträger (30) in Form einer Chipkarte ausgeführt ist.

## Claims

1. A method for securely inputting an access code for secure access to an electronic service, wherein the service is made available via or on a computer (10) and wherein access to an electronic service is only granted if the input access code corresponds to a predetermined access code, with the following steps of:
making available a random initial state of a plurality of user-selectable fields (32);
displaying the plurality of user-selectable fields (32) via a display device (31);
inputting the access code by a user by changing the state of the displayed user-selectable fields (32);
**characterized in that**
for carrying out the method a portable data carrier (30) is connected to the computer (10),
the display of the plurality of user-selectable fields (32) is effected on a display device (31) of the portable data carrier (30), and
the changing of the state of the displayed user-selectable fields (32) is effected via an input device (11) of the computer (10),
after complete input of the access code either an authentication is effected on the portable data carrier (30) or the input access code is transmitted from the portable data carrier (30) to the computer (10) for this purpose.

2. The method according to claim 1, wherein, when the portable data carrier (30) is configured to be of the contact type, it is arranged in the reading device (20) such that the display device (31) displaying the plurality of user-selectable fields (32) is visible at any time.

3. The method according to claim 1 or 2, wherein upon a change of the state of one of the displayed user-selectable fields (32), the change is visualized on the display device (31).

4. The method according to any one of the preceding claims, in which for inputting the access code, the plurality of user-selectable fields (32) is changed sequentially.

5. The method according to claim 4, wherein a confirmation is made by the user, when a changed field (32) has the correct value for the access code, whereupon a switching takes place to a next field (32) to be changed.

6. The method according to claim 5, wherein the correct value is made unrecognizable after the confirmation of the changed field (32).

7. The method according to any one of the preceding claims, wherein the field (32) to be changed is highlighted or represented with a marking with respect to the other fields (32).

8. The method according to any one of the preceding claims, wherein the user inputs the access code via an input device (11) configured as a pointing device (12, 13, 14).

9. The method according to claim 8, wherein one or several of the following devices are employed as pointing device:
a mouse connected to the computer (10), in particular with a scroll wheel;
a keyboard of the computer (10), in particular cursor keys of the keyboard;
a touch screen of the computer (10);
a touch pad of the computer (10).

10. A device for securely inputting an access code for secure access to an electronic service, comprising:
a portable data carrier (30) having a display device (31) for graphically displaying a plurality of user-selectable fields (32);
a reading device (20) for contact-type or contactless data exchange with the portable data carrier (30);
a computer (10) coupled with the reading device (20), said computer having an input device (11) by means of which the state of displayed user-selectable fields (32) can be changed by a user to adjust an access code on the display device (31) of the portable data carrier (30),
wherein the portable data carrier (30) is adapted to either authenticate the access code after complete input or to transmit it to the computer (10) for authentication.

11. The device according to claim 10, wherein the computer (10) and/or the portable data carrier (30) is configured such that a random initial state of the plurality of user-selectable fields (32) is made available.

12. The device according to claim 10 or 11, wherein the computer (10) and/or the portable data carrier (30) are configured to grant the user access to an electronic service, if the input access code corresponds to a predetermined access code.

13. The device according to any one of claims 10 to 12, wherein the reading device (20) is configured such that the portable data carrier (30) configured to be of the contact-type and arranged in the reading device (20) permits a graphical display of the plurality of user-selectable fields (32) on the display device (31).

14. The device according to any one of claims 10 to 13, **characterized in that** for inputting the access code it has
a mouse connected to the computer (10), in particular with a scroll wheel;
a keyboard of the computer (10), in particular cursor keys of the keyboard;
a touch screen of the computer (10); or
a touch pad of the computer (10).

15. The device according to any one of claims 10 to 13, **characterized in that** the portable data carrier (30) is executed in the form of a chip card.

## Revendications

1. Procédé d'entrée sécurisée de données d'un code d'accès destiné à un accès sécurisé à un service électronique, cependant que le service est mis à disposition par l'intermédiaire d'un ou sur un ordinateur (10), et cependant qu'un accès à un service électronique n'est accordé que si le code d'accès entré correspond à un code d'accès prédéterminé, comprenant les étapes suivantes :
- mise à disposition d'un état initial aléatoire d'une pluralité de champs (32) sélectionnables par un utilisateur ;
- affichage de la pluralité de champs (32) sélectionnables par un utilisateur, par l'intermédiaire d'un dispositif d'affichage (31) ;
- entrée du code d'accès par un utilisateur, par modification de l'état des champs (32) affichés sélectionnables par un utilisateur ;
**caractérisé en ce que**
- pour l'exécution du procédé, un support de données portable (30) est relié à l'ordinateur (10),
- l'affichage de la pluralité de champs (32) sélectionnables par un utilisateur a lieu sur un dispositif d'affichage (31) du support de données portable (30), et
- la modification de l'état des champs (32) affichés sélectionnables par un utilisateur a lieu par l'intermédiaire d'un dispositif d'entrée (11) de l'ordinateur (10),
- après entrée complète du code d'accès, soit, sur le support de données portable (30), une authentification a lieu, soit le code d'accès entré est transmis à cet effet du support de données portable (30) à l'ordinateur (10).

2. Procédé selon la revendication 1, dans lequel, si le support de données portable (30) est réalisé avec contact, il est agencé de telle manière dans l'appareil de lecture (20) que le dispositif d'affichage (31) affichant la pluralité de champs (32) sélectionnables par un utilisateur est visible à tout moment.

3. Procédé selon la revendication 1 ou 2, dans lequel, lors d'une modification de l'état des champs (32) affichés sélectionnables par un utilisateur, la modification est visualisée sur le dispositif d'affichage (31).

4. Procédé selon une des revendications précédentes, dans lequel, lors de l'entrée du code d'accès, la pluralité de champs (32) sélectionnables par un utilisateur est modifiée séquentiellement.

5. Procédé selon la revendication 4, dans lequel, par l'utilisateur, une confirmation est effectuée quand un champ (32) modifié présente la valeur correcte pour le code d'accès, à la suite de quoi une commutation vers un prochain champ (32) à modifier a lieu.

6. Procédé selon la revendication 5, dans lequel, après la confirmation du champ (32) modifié, la valeur correcte est rendue indéchiffrable.

7. Procédé selon une des revendications précédentes, dans lequel le champs (32) à modifier est représenté, par rapport aux autres champs (32), sous forme rehaussée ou marquée.

8. Procédé selon une des revendications précédentes, dans lequel l'utilisateur entre le code d'accès par l'intermédiaire d'un dispositif d'entrée (11) réalisé sous forme d'appareil de pointage (12, 13, 14).

9. Procédé selon la revendication 8, dans lequel , en tant qu'appareil de pointage, un ou plusieurs des appareils suivants sont utilisés :
- une souris reliée à l'ordinateur (10), en particulier munie d'une molette de défilement ;
- un clavier de l'ordinateur (10), en particulier des touches curseur du clavier ;
- un écran tactile de l'ordinateur (10) ;
- un pavé tactile de l'ordinateur (10).

10. Dispositif destiné à l'entrée sécurisée de données d'un code d'accès destiné à un accès sécurisé à un service électronique, comprenant :
- un support de données portable (30) qui comporte un dispositif d'affichage (31) pour l'affichage graphique d'une pluralité de champs (32) sélectionnables par un utilisateur,
- un appareil de lecture (20) pour l'échange de données avec contact ou sans contact avec le support de données portable (30) ;
- un ordinateur (10) couplé à l'appareil de lecture (20) et comportant un dispositif d'entrée (11) au moyen duquel l'état de champs (32) affichés sélectionnables par un utilisateur peut être modifié par un utilisateur afin d'établir sur le dispositif d'affichage (31) du support de données portable (30) un code d'accès,
- cependant que le support de données portable (30) est configuré pour soit, après entrée complète du code d'accès, authentifier ce dernier, soit le transmettre à l'ordinateur (10) pour l'authentification.

11. Dispositif selon la revendication 10, dans lequel l'ordinateur (10) et/ou le support de données portable (30) est réalisé de telle façon qu'un état initial aléatoire de la pluralité de champs (32) sélectionnables par un utilisateur est mis à disposition.

12. Dispositif selon la revendication 10 ou 11, dans lequel l'ordinateur (10) et/ou le support de données portable (30) sont réalisés pour accorder à un utilisateur un accès à un service électronique quand le code d'accès entré correspond à un code d'accès prédéterminé.

13. Dispositif selon une des revendication de 10 à 12, dans lequel l'appareil de lecture (20) est réalisé de telle façon que le support de données portable (30) réalisé avec contact et agencé dans l'appareil de lecture (20) permet un affichage graphique de la pluralité de champs (32) sélectionnables par un utilisateur sur le dispositif d'affichage (31).

14. Dispositif selon une des revendications de 10 à 13, **caractérisé en ce que**, pour l'entrée du code d'accès, il comporte
- une souris reliée à l'ordinateur (10), en particulier munie d'une molette de défilement ;
- un clavier de l'ordinateur (10), en particulier des touches curseur du clavier ;
- un écran tactile de l'ordinateur (10) ; ou
- un pavé tactile de l'ordinateur (10).

15. Dispositif selon une des revendications de 10 à 13, **caractérisé en ce que** le support de données portable (30) est réalisé sous forme d'une carte à puce.
